# EUROPÄISCHE PATENTSCHRIFT

(11) **EP 1 399 287 B1**
(45) Veröffentlichungstag und Bekanntmachung des Hinweises auf die Patenterteilung: **08.08.2007**
(21) Anmeldenummer: 02750514.8
(22) Anmeldetag: 07.03.2002
(51) Int. Cl.: B23K 26/00

(54) **VERFAHREN ZUM SCHNEIDEN VON ZU FÜGENDEN BAUTEILEN MIT LASERSTRAHLUNG**
METHOD FOR LASER-CUTTING STRUCTURAL COMPONENTS TO BE JOINED
PROCEDE DE COUPE AU RAYONNEMENT LASER DE PIECES A ASSEMBLER

(30) Priorität: 13.03.2001 DE 10112445
(43) Veröffentlichungstag der Anmeldung: 24.03.2004
(73) Patentinhaber: Fraunhofer-Gesellschaft zur Förderung der angewandten Forschung e.V., 80686 München (DE); ThyssenKrupp Steel AG, 47166 Duisburg (DE); ThyssenKrupp Drauz Nothelfer GmbH, 74076 Heilbronn (DE)
(72) Erfinder: SCHULZ, Wolfgang, 52379 Langerwehe (DE); MICHEL, Jan, 52064 Aachen (DE); ABELS, Peter, 52477 Alsdorf (DE); ALBER, Gerhard, 88213 Ravensburg (DE); NEUBERT, Jörg, 74081 Heilbronn (DE); BEHR, Friedrich, 52072 Aachen (DE); KAIERLE, Stefan, 52134 Herzogenrath (DE)
(74) Vertreter: Draudt, Axel Hermann Christian
(86) Internationale Anmeldenummer: PCT/DE2002/000818
(87) Internationale Veröffentlichungsnummer: WO 2002/072304

(56) Entgegenhaltungen:
- DE-C- 3 818 402
- US-A- 5 463 202

## Beschreibung

Die Erfindung bezieht sich auf ein Verfahren mit den Merkmalen des Oberbegriffs des Anspruchs 1.

Aus der DE-Z Techpress 1/97, S. 21 bis 26 ist ein Verfahren zum Schneiden von zu fügenden Bauteilen mit Laserstrahlung bekannt, bei dem ein Laserstrahlung abgebender Schneidkopf einer Laserschneidanlage mittels eines automatisierten Handhabungssystems geführt wird. Die Führung erfolgt auf einer vorgegebenen Sollbahn.

Wenn das Schneiden erfolgt, um zu fügende Bauteile herzustellen, muß die Sollbahn möglichst genau der Fügelinie entsprechen. Wenn Bauteile mit gekrümmten Fügelinien gefügt werden sollen, beispielsweise durch Schweißen mit Hochenergiestrahlung, wie Laserstrahlung, so muß das Handhabungssystem beim Schneiden jedes der zu fügenden Bauteilen eine Bahn der Laserstrahlung bewirken, die der gekrümmten Fügelinie möglichst genau entspricht. Der Genauigkeit steht eine Vielzahl von Fehlerquellen entgegen. Beispielsweise genannt sei die Formgebung der zu fügenden Bauteile und die Bahnungenauigkeit von Handhabungssystemen. Außerdem soll bei dem Verfahren eine möglichst große Produktion erreicht werden, so daß hohe Schnitt- und Schweißgeschwindigkeiten angestrebt werden. Die Qualität der Schweißverbindung darf jedoch nicht leiden, so daß Schnittfugen- und Schweißfugenbreiten in vorbestimmten Grenzen gehalten werden müssen. Aus den vorgenannten Gründen ist es erforderlich, die zu fügenden Bauteile möglichst präzise zuzuschneiden.

Aus der DE 38 18 402 C1 ist ein Verfahren zum Brennschneiden bekannt, bei dem die Durchdringungslinie zweier Körper anhand ihrer tatsächlichen Abmessungen ausgemessen wird. Hierzu wird den beiden Körpern jeweils ein Bereich vorgegeben, der die Durchdringungslinie umfaßt. Gemessene Werte beider Bereiche werden gespeichert und aus diesen Werten wird die Durchdringungslinie berechnet, demgemäß dann die Schweißnaht hergestellt wird. Ein Einsatz eines rechnergesteuerten Handhabungssystems in Zusammenwirken mit Laserstrahlung erfolgt nicht. Während des Brennschneidens erfolgt keinerlei Korrektur einer Brennschneidmaschine.

Aus der US-A-5,463,202 A ist ein Verfahren zum Bearbeiten von Werkstücken mit Laserstrahlung bekannt, bei dem von der Bearbeitungsstelle herrührendes Sekundärlicht meßtechnisch erfaßt und einer Steuereinrichtung zugeführt wird, die eine NC-Einrichtung beaufschlagt, von der ein ein Werkstück tragender Werktisch angesteuert wird. Eine Führung der Laserstrahlung mittels eines rechnergesteuerten Handhabungssystems erfolgt nicht.

Der Erfindung liegt daher die Aufgabe zugrunde, ein Verfahren mit den eingangs genannten Merkmalen im Sinne eines präzisen Zuschneidens zu verbessern.

Diese Aufgabe wird durch die Merkmale des Kennzeichenteils des Anspruchs 1 gelöst.

Für die Erfindung ist von Bedeutung, daß zumindest die Oberflächenabschnitte der Bauteile vermessen werden, die die Fügelinie aufweisen sollen. Infolgedessen können in ihrer geometrischen Form nicht genau bekannte Bauteile präzise erfaßt werden. Entsprechend der Präzision der Meßergebnisse kann dann eine Durchdringungslinie errechnet werden, welche die beiden zu fügenden Bauteile gemeinsam haben. Die Sollbahn entspricht dieser Durchdringungslinie und kann damit rechnerisch präzise ermittelt werden. Ungenauigkeiten bei einer Vorfertigung der Bauteile kommen wegen ihrer meßtechnischen Erfassung nicht zur Auswirkung auf die Präzision des Schnitts. Des weiteren ist für die Erfindung von Bedeutung, daß auf einer meßtechnisch erfaßten Bauteiloberfläche eine Markierung dieser Bauteiloberfläche erfolgt. Eine solche Markierung ist einer Referenzierung dienlich, die durchgeführt werden muß, damit ein Sensor beim Schneiden eines Bauteils die entstandene Schnittfuge in ihrer Größe und Lage fehlerfrei erfassen kann, nämlich frei von Zuordnungsfehlern zwischen der erfaßten Schnittgeometrie und der vorgegebenen Sollbahn. Die meßtechnische Erfassung der entstandenen Schnittfuge kann damit genau genug sein, um das Handhabungssystem im Fall einer Abweichung der Schnittfuge von der Sollbahn so anzusteuern, daß während des Schneidens eine Beseitigung der Abweichung erreicht wird.

Das Verfahren wird zweckmäßigerweise so durchgeführt, daß die Markierung der meßtechnisch erfaßten Bauteiloberfläche zugleich mit deren meßtechnischer Erfassung erfolgt. Da die Markierung während des Meßvorgangs erfolgt, werden Markierungsfehler vermieden, die bei zeitversetzter Markierung entstehen könnten, zum Beispiel wegen des Zeitunterschieds unterschiedlicher Meß- und Markierungsparameter.

Es ist zu bevorzugen, daß die Markierung mit dem das Schneiden des Bauteils durchführenden Laser erfolgt. Es ist daher nicht zu erwarten, daß bei einer Markierung Fehler auftreten, die aus räumlich unterschiedlicher Positionierung des Lasers und eines besonderen Markierungsinstruments entstehen könnten. Auch werden Fehler vermieden, die infolge unterschiedlichen dynamischen Verhaltens des Lasers und eines Markierungselements herrühren könnten.

Des weiteren ist zu bevorzugen, daß die Markierung auf der Sollbahn oder in deren Nähe erfolgt. Hierdurch wird vor allem erreicht, daß der Beobachtungsbereich klein gehalten werden kann. Das ist vorteilhaft, um wenig aufwendige Sensoren einsetzen zu können und um den Rechenaufwand klein zu halten. Ferner ergibt sich dadurch die Möglichkeit, bei vorbestimmtem Rechenaufwand mit hohem Taktraten zu arbeiten, was für ein genaues Korrigieren von Abweichungen beim Schneiden von Vorteil ist oder eine erhöhte Schnittgeschwindigkeit erlaubt.

Im vorbeschriebenen Sinne vorteilhaft ist es darüber hinaus, wenn die Markierung nur stellenweise erfolgt.

Das vorangesprochene schnelle Korrigieren oder eine zeitoptimierte Durchführung des Schneidens können dadurch verbessert werden, daß als Markierung die beim Schneiden entstehende Schnittfuge verwendet wird. Das setzt allerdings ein hinreichend zuverlässiges Bahnverhalten des Handhabungssystems voraus, beispielsweise hinsichtlich Kinetik, Dynamik und thermischer Effekte derart, daß eine tolerierbare Schnittfugenbreite nicht überschritten wird. Entsprechendes gilt in geringerem Maße auch für die vorerwähnte Verfahrensvariante, bei der die Markierung nur stellenweise erfolgt. Die Zuverlässigkeit des Bahnverhaltens bringt es mit sich, daß die Referenzierung der Sollbahn nur in Abständen notwendig ist.

Das Verfahren kann dahingehend verbessert werden, daß bei der meßtechnischen Erfassung der Markierung und der Schnittfuge derselbe Sensor verwendet wird. Das vereinfacht nicht nur den Aufbau einer Vorrichtung, die zur Durchführung des Verfahrens benötigt wird, sondern es vermeidet auch Fehler, die infolge eines komplizierteren Aufbaus der Vorrichtung mit unterschiedlichen Sensoren zu erwarten sind, beispielsweise wegen unterschiedlicher Anordnung und damit unterschiedlicher Meßpositionen mehrerer Sensoren.

Von Vorteil bei der Durchführung des Verfahrens kann es sein, wenn ein für eine meßtechnische Erfassung eingesetzter Sensor bildgebend ist. Ein bildgebender Sensor erleichtert es insbesondere, mit geringem baulichen Aufwand zugleich die meßtechnische Erfassung der Bauteiloberfläche und deren Markierung einerseits zu leisten, sowie andererseits zugleich die Erfassung dieser Markierung und des effektiven Verlaufs bzw. der entstehenden Schnittfuge.

Um eine bewährte Technik bei dem Verfahren einzusetzen, wird so vorgegangen, daß ein für eine meßtechnische Erfassung eingesetzter Sensor eine CCD-Kamera ist. Die mit der CCD-Kamera erfaßten Daten können mit bewährten Verfahren der Bildauswertung bearbeitet,und in bestehende Rechner und Steuereinrichtungen eingebunden werden. Statt einer CCD-Kamera können auch andere bildgebende Sensoren eingesetzt werden, wie beispielsweise eine CMOS-Kamera oder ein PSD-Sensor.

Um eine zuverlässige Vermessung zweier oder mehrerer Bauteile bezüglich ihrer Relativstellungen im Fügefall zu erreichen, kann das Verfahren so durchgeführt werden, daß die Bauteile bei einer meßtechnischen Erfassung ihrer Bauteiloberflächen in einer vorbestimmten relativen Anordnung positioniert werden. Diese vorbestimmte relative Anordnung kann insbesondere auf ihre späteren Fügestellung abgestimmt sein, wobei ein Bauteil eine auch beim Fügen einzunehmende Stellung aufweisen kann, während ein anderes Bauteil oder mehrere andere Bauteile von ihrer Fügestellung lediglich so weit entfernt sein müssen, wie das durch die abzuschneidenden Bauteilreste bedingt ist, sofern das Handhabungssystem eine derartige Anordnung ohne unerwünschte Beeinflussung des übrigen Verfahrensablaufs zuläßt.

Zur Durchführung einer meßtechnischen Erfassung zweier Bauteiloberflächen kann es vorteilhaft sein das Verfahren so durchzuführen, daß bei einer meßtechnischen Erfassung zweier Bauteiloberflächen zwei in einer vorbestimmten relativen Anordnung positionierte Abstandsmeßgeräte verwendet werden. Die relative Anordnung der Abstandsmeßgeräte zueinander kann so vorbestimmt werden, daß sie auf die relative Anordnung der Positionierung der Bauteile zur meßtechnischen Erfassung ihrer Bauteiloberflächen gemäß dem vorbeschriebenen Verfahren abgestimmt ist. Die vorbestimmte relative Anordnung zweier Abstandsmeßgeräte ermöglicht darüber hinaus auch das gleichzeitige Erfassen zweier Bauteiloberflächen einschließlich der gegebenenfalls darauf zugleich vorgenommenen Markierungen. Es kann infolgedessen nicht zu Fehlern kommen, die eventuell bei der Anorndung eines einzigen Abstandsmeßgeräts zu erwarten sind, wenn dieses nacheinander auf die beiden Bauteiloberflächen ausgerichtet und zur meßtechnischen Erfassung eingesetzt werden.

Das erfindungsgemöße Verfahren wird anhand der Darstellungen der Figuren näher erläutert. Es zeigt:
- Fig.1: eine schematische Anordnung aller für die Durchführung des Verfahrens erforderlicher Komponenten,
- Fig.2: eine Darstellung zur Bestimmung einer Sollbahn,

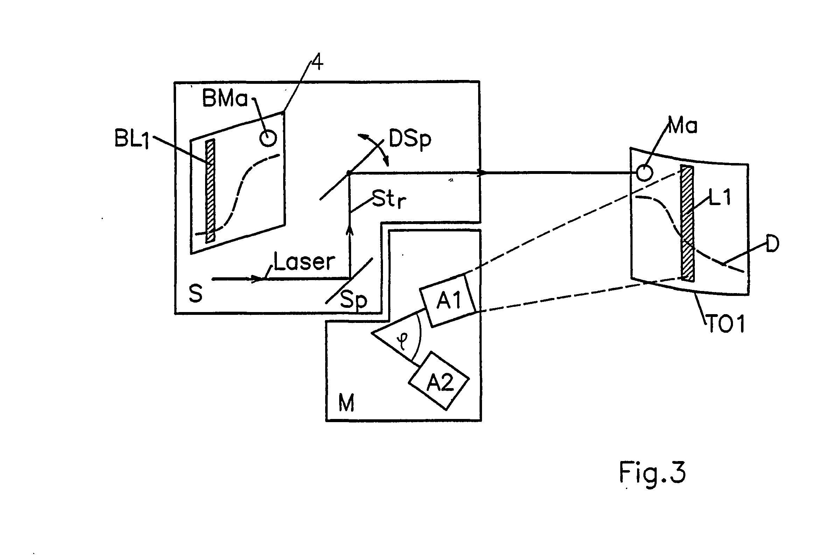

- Fig.3: eine Darstellung zur Erläuterung der Übertragung von Daten einer meßtechnisch erfaßten Bauteiloberfläche und einer meßtechnisch erfaßten Markierung auf einen bildgebenden Sensor,
- Fig.4: eine schematische Darstellung einer während des Schneidens entstehender Schnittfuge, und
- Fig.5: eine zur Ausbildung der Schnittfuge eingesetzte errechnete Bauteiloberfläche.

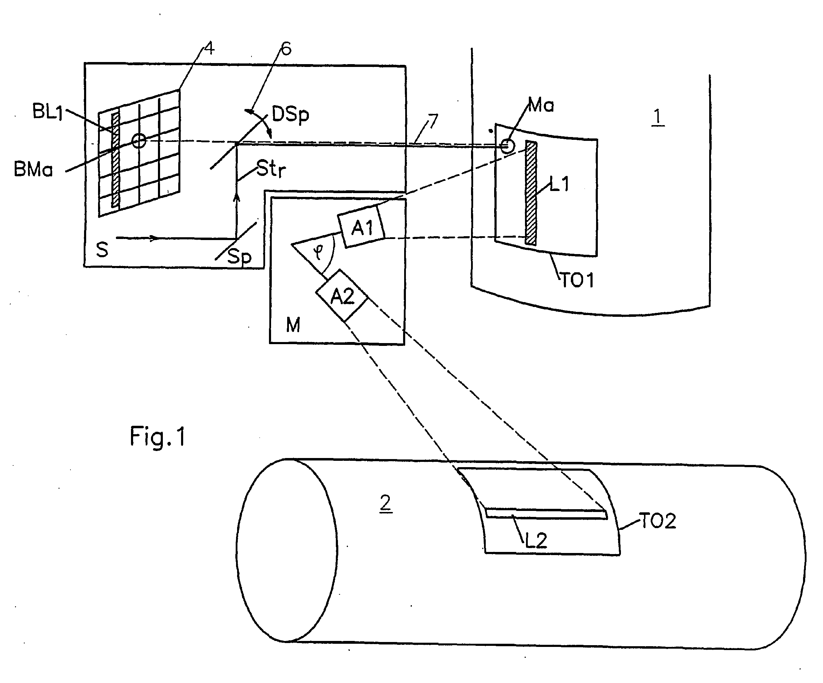

In Fig.1 sind zwei Bauteile 1,2 schematisch dargestellt. Beide sind rohrförmig dargestellt, wobei es auf diese Ausbildung nicht ankommt, sondern auch beliebige andere 3D-Strukturen in Betracht kommen. Insbesondere eines der Bauteile 1,2 ist derartig dreidimensional, daß eine dreidimensionale gekrümmte Fügelinie entsteht, wenn die beiden Bauteile 1,2 durch Verschweißen miteinander verbunden werden.

Die formenmäßige Ausgestaltung der Bauteile 1,2 ist beliebig, es können beispielsweise Bauteile sein, die bei der Ausfächerung von Fachwerken eingesetzt werden, wobei Stumpfnähte zwischen zum Beispiel Rohren oder Profilen als Rahmen und beispielsweise Flächen als Ausfächerung geschweißt werden. Es können auch IHU-Bauteile verwendet werden, die durch Innen-Hochdruck-Umformen hergestellt sind und im Rahmen von Space-Frame-Konzepten mit Knickarmrobotern verschweißt werden. Dabei sind im Rahmen des Space-Frame-Konzepts auch Bauteile aus Stahlwerkstoffen herstellbar. Es könnten auch Bauteile aus leicht umformbaren Baustoffen eingesetzt werden, wie zum Beispiel aus Aluminium. Die Verbindung zwischen diesen Bauteilen wird durch Schweißen und ohne eine zum Beispiel durch Bördeln erfolgende Nahtvorbereitung und ohne Umformen während des Flugvorgangs hergestellt, wie durch Pressen zum umformenden Anpassen. Die vorgeannten Bauteile werden beispielsweise in der Automobilindustrie, beim Prototypenbau, bei Einzelanfertigungen eingesetzt.

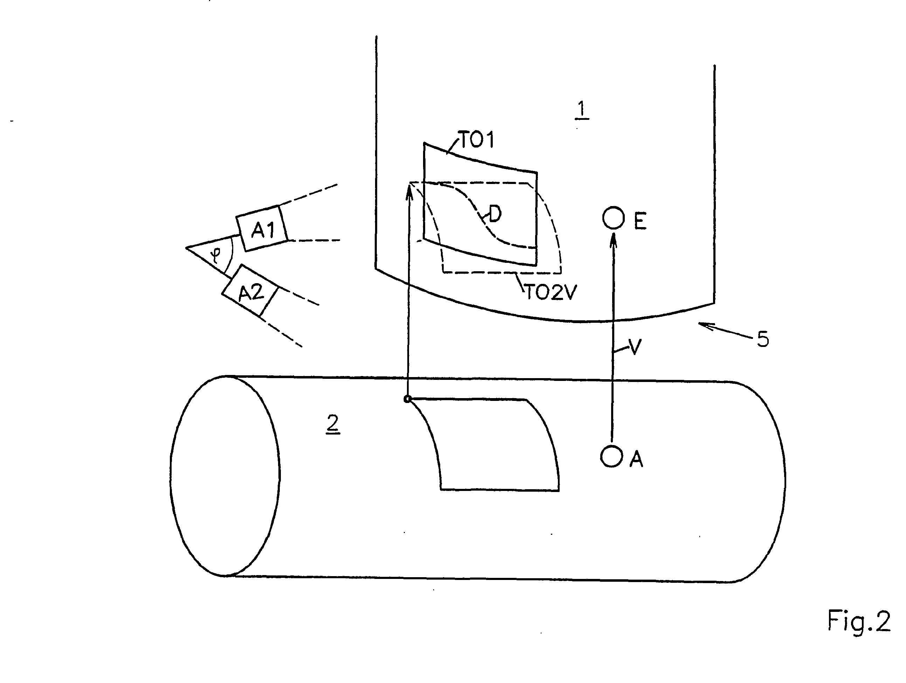

Die Bauteile 1,2 sind in Fig.1 in einer vorbestimmten relativen Anordnung positioniert, wobei das Bauteil 1 eine feste, beim Schneiden und beim Fügen unverrückbare Stellung einnimmt. Das Schneiden dient einer räumlichen Anpassung des Bauteils 1 an den Außenumfang des Bauteils 2, wonach letzteres gemäß Fig.2 aus einer Position A um eine vorbestimmte Verschiebung V in eine Position E an der Stirnseite 5 des Bauteils 1 verschoben werden kann, um dann das Fügen durchzuführen.

Um die Stirnseite 5 des Bauteils 1 an den Außenumfang des Bauteils 2 möglichst genau anpassen zu können, müssen die Bauteile 1,2 zumindest in den Bauteilbereichen genau bekannt sein, in denen sie gefügt werden sollen. Für das Bauteil 1 ist hier die Bauteiloberfläche TO1 schematisch angegeben, während die Bauteiloberfläche des Bauteils 2 durch T02 gekennzeichnet ist. Im Bereich dieser Oberflächen TO1,TO2 soll eine Fügelinie ausgebildet werden.

Die Positionierung der Bauteile 1,2 kann mit ihrer Herstellung verknüpft werden. Die Bauteile 1,2 werden zum Beispiel durch Umformen gefertigt. Dabei werden die Bauteile zum Beispiel durch Bestimmbolzen des Umformwerkzeus während des Umformvorgangs fixiert. Die Bestimmbolzen greifen in Referenzbohrungen der Bauteile 1,2 ein, um die Bauteilposition festzulegen. Mit Hilfe der Referenzbohrungen wird die Anordnung der Bauteile 1,2 definiert. In der in Fig.1 dargestellten Anfangslage wird der Zuschnitt am Bauteile 1 durchgeführt und in einer gemäß Fig.2 durch die angedeutete Verschiebung von A nach E ableitbare Endlage von Bauteil 2 soll eine vorgegebene Spaltweite zwischen den beiden Bauteilen 1,2 nicht überschritten werden. Eine tolerierbare Spaltweite zwischen einer Schnittkante von Bauteil 1 und dem Außenumfang von Bauteil 2 ist durch die Föhigkeit der Schweißanordnung zum Spaltüberbrücken bestimmt. Moderne Nd:YAG-Laser können Spaltweiten bis zu 100 µm überbrücken.

Um die Gestaltung der Bauteile 1,2 erfassen zu können wird eine Meßeinrichtung M eingerichtet. Mit der Meßeinrichtung müssen zumindest diejenigen Bauteiloberflächen TO1 des Bauteils 1 und T02 des Bauteils 2 meßtechnisch erfaßt werden, in denen die Fügelinie ausgebildet werden soll, in denen also die Bauteile 1,2 miteinander verschweißt werden sollen. Dabei wird davon ausgegangen, daß die Bauteile 1,2 in einer vorbestimmten relativen Anorndung zueinander positioniert sind, wie das schematisch Fig.1 zeigt. Unter dieser Voraussetzung können zwei Abstandsmeßgeräte A1,A2 eingesetzt werden, die ebenfalls in einer vorbestimmten relativen Anordnung positioniert sind, die in Fig.1 durch die Winkelgröße ϕ bestimmt ist. Die Abstandsmeßgeräte A1,A2 beinhalten Meßlaser, die auf den Bauteiloberflächen TO1,TO2 jeweils einen Linienfokus L1 bzw. L2 erzeugen können. Bei der Abstandsmessung können Oberflächenscans für allgemein bekannte Meßverfahren in unterschiedlicher Weise durchgeführt werden. Die Vermessung kann mittels Triangulation, Holographie oder Interpherometrie erfolgen. Es können unterschiedliche Meßsignale eingesetzt werden, zum Beispiel der Weißlicht- bzw. Radarinterpherometrie entsprechend. Es können unterschiedliche Detektionsgeräte eingesetzt werden, zum Beispiel CCD-Kameras, CMOS-Kameras oder PSD-Sensoren. Die erreichbare Genauigkeit wird bei zum Beispiel dem Triangulationsverfahren mit einem Promille abgeschätzt. Interpherometrie-Verfahren können Genauigkeiten im Mikrometer-Bereich erreichen. Die tatsächliche Genauigkeit hängt darüber hinaus jedoch stark von Randbedingungen ab, wie zum Beispiel von einer Verschmutzung der zu vermessenden Bauteile.

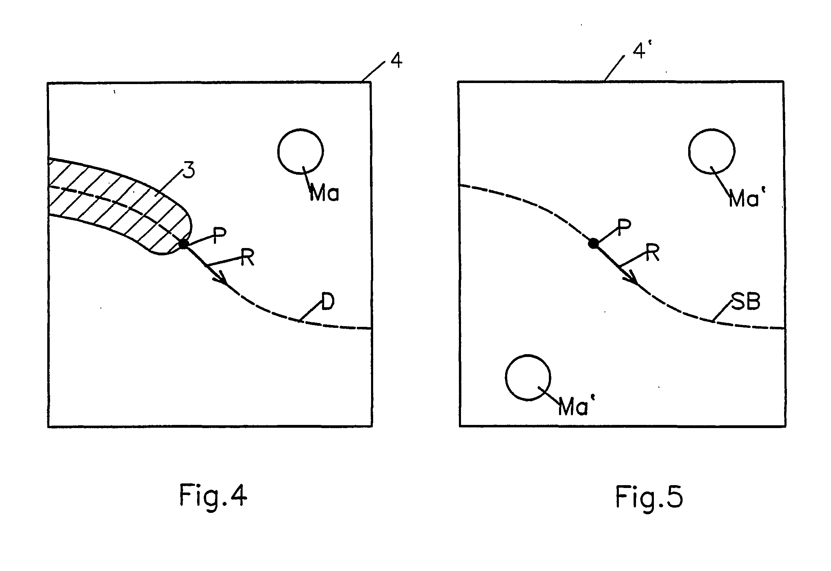

Mit den Meßergebnissen für die die Fügelinie umfassenden Bauteiloberflächen TO1,TO2 läßt sich die Durchdringungslinie D der Bauteile 1,2 berechnen, wenn dazu die Verschiebung des Bauteils 2 von A nach E berücksichtigt wird, so daß die Bauteiloberfläche T02 die in Fig.2 dargestellte Verschiebestellung T02V einnimmt. Die Durchdringungslinie D ist theoretisch diejenige Position, welche die Fügungslinie im Idealfall einnimmt und entspricht somit einer Sollbahn SB, wie sie in Fig.5 schematisch angegeben ist. Die Sollbahn dient der Steuerung des Schneidevorgangs im Fall der konkreten Bauteile 1,2 und kann für ein anderes Bauteilpaar mit gleichem Herstellungsverfahren anders sein.

Zur Durchführung des Schneidens der Bauteile 1,2 dient ein Schneidsystem S. Es besteht im wesentlichen aus einem Handhabungssystem mit einem Laser und kann die Meßeinrichtung M aufweisen. Als Handhabungssysteme können alle bekannten Systeme eingesetzt werden, beispielsweise Knickarmroboter. Das System enthält ein Strahlablenksystem, in Fig.1 durch einen Drehspiegel DSp gekennzeichnet, dem von einem Laser kommende Laserstrahlung Str dem Drehspiegel Dsp über einen Ablenkspiegel Sp zugeleitet wird. Der Drehspiegel kann aus dichroitischem Werkstoff bestehen, der von einem Nd:YAG-Laser kommende Laserstrahlung reflektiert und damit auf das Bauteil lenkt. In Fig.1 ist mit dem Doppelpfeil 6 angedeutet, daß der Drehspiegel DSp zu Strahlablenkungen in der Lage ist. Diese Bewegung kann unabhängig von etwaigen Bewegungen des Handhabungssystems erfolgen, also beispielsweise zusätzlich. Damit können ungenaue Bewegungen von Roboterachsen während des Schneidens kompensiert werden, beispielsweise während des Schneidens von Konturen mit kleinen Radien. Damit wird die Bahngenauigkeit erhöht. Im Umfang der Beweglichkeit des Drehspiegels DSp können auch Bewegungen von Roboterachsen während des Schneidens völlig vermieden werden.

Zur Durchführung der vorbeschriebenen Schneidverfahren ist das Schneidsystem S mit einem Sensor 4 ausgestattet. Der Sensor 4 wird zum meßtechnischen Erfassen der Oberflächen TO1,TO2 eingesetzt. Während der meßtechnischen Erfassung zur Bestimmung der Oberfläche des Bauteils 1 erfaßt der Sensor 4 das Bild B11 des Linienfokus L1. Infolgedessen ist der Sensor 4 unter Verwendung des Meßergebnisses des Abstandsmeßgeräts A2 und mit Hilfe des nicht dargestellten Rechners, der die Sollbahn SB kennt, in der Lage, die Durchdringungslinie bzw. die Fügelinie beim Schweißen zu erkennen und zu vermessen. Dementsprechend ist es möglich, die Fügelinie mit dem Sensor 4 ebenso unter Bezugnahme auf die Sollbahn SB zu überwachen wie die Schnittfuge 3 beim Schneiden des Bauteils 1.

Der Sensor 4 ist als bildgebendes System ausgebildet, nämlich als CCD-Kamera. Die CCD-Kamera beobachtet insbesondere die meßtechnisch zu erfassende Bauteiloberfläche TO1. Für die meßtechnische Erfassung erforderlich, daß Signale des Prozesses aufgenommen und an den nicht dargestellten Rechner weitergegeben werden, von dem sie verarbeitet werden. Bei den bildgebenden Verfahren kann die Blickrichtung der Kamera von Bedeutung sein. Die Blickrichtung der CCD-Kamera gemäß Fig.1 ist koaxial zum Laserstrahl. Im Hinblick hierauf ist der Drehspiegel DSp in der Lage, vom Bauteil 1 reflektierte Sekundärstrahlung durchzulassen. Der Sensor 4 kann also von TO1 ausgehende Wärmestrahlung erkennen, da diese vom Drehspiegel DSp nicht reflektiert wird. Infolgedessen ist es möglich, eine Schweißfuge beim Fügen oder die Schnittfuge 3 beim Schneiden des Bauteils 1 mit der CCD-Kamera bzw. mit dem Sensor 4 zu beobachten.

Um eine maßgenaue Erfassung der Bauteiloberfläche TO1 zu gewährleisten, ist es notwendig, die CCD-Kamera zu referenzieren. Zur Referenzierung wird auf dem Bauteil 1 eine Markierung Ma auf der Bauteiloberfläche TO1 bei vorbestimmter relativer Anordnung des Bauteils 1 und des Handhabungssystems bzw. des Schneidsystems S erzeugt. Die Markierung Ma wird mit dem Bearbeitungslaser erzeugt, der auch für das Schneiden des Bauteils 1 eingesetzt wird. Die dabei entstehende Rückstrahlung 7 durchdringt den Drehspiegel DSp und erzeugt auf dem Sensor 4 das Bild BMa der Markierung Ma. Da die räumlichen Anordnungen des Meßsystems M und des Schneidsystems S einerseits und des Bauteils 1 andererseits bekannt sind, hat damit das Bild BL1 des Linienfokus L1 einen maßbekannten Abstand vom Bild BMa der Markierung Ma, was Voraussetzung für die oben genannte rechnerisch genaue Bestimmung der Durchdringungslinie D bzw. der Fügelinie und auch der Sollbahn SB ist. Der Rechner verfügt im Sollbereich über die genaue Position Ma' der Markierung Ma. Über die Beobachtung der Markierung Ma kann daher stets festgestellt werden, welche tatsächliche Lage eine Schnittfuge 3 oder eine Fügelinie auf das Bauteil 1 hat. Mit dem Sensor 4 kann stets entsprechend der Vorgabe des Referenzbildes 4' gemäß Fig.5 eine maßgenaue Überwachung des tatsächlichen Bearbeitungsvorangs vorgenommen werden, also beispielsweise des Schneidens. Die Sollbahn SB ist stets bezüglich ihres Ortes P und ihres Richtungsvektors R bekannt, so daß das Vorhandensein dieser Größen P,R beim Bearbeiten stets zu überprüfen ist. Im Fall einer Abweichung von der Sollbahn SB bzw. der vorgenannten Größen P,R während der Bearbeitung wird eine Steuerung des Handhabungssystems im Sinne einer Beseitigung dieser Abweichung durchgeführt.

Das vorbeschriebene Verfahren und seine Variante dienen einem präzisen Zuschneiden eines Bauteils als Vorbereitung zum paßgenauen Fügen mit einem zweiten Bauteil und als Vorbereitung für das nachfolgende Schweißen entlang einer durch das Schneiden präzise bestimmten Fügelinie. Von den Bauteilen hat zumindest eines eine dreidimensionale Formgebung, die jedoch nicht genau vorbekannt ist. Infolgedessen sind die Schnittkontur und die Neigung der Schnittkante nicht mit der erforderlichen Genauigkeit vorherbestimmt. Infolge der unbekannten geometrischen Form der zu fügenden Bauteile und infolge der unbekannten Lage des Handhabungssystems zur Führung einer Strahlquelle bzw. zur Führung des Laserstrahls ergeben sich während eines Bearbeitens entsprechende Ungenauigkeiten, die gemessen werden müssen. Obwohl die Sollbahn für die Bearbeitung nicht vorbestimmt ist und gemessen werden muß, und obwohl die geforderte obere Grenze für die Abweichung des durch das Schneiden entstehenden Fügespalts bzw. der Schnittkante von der Sollbahn kleiner ist, als die Bahnabweichung des gesteuerten Handhabungssystems, mit dem das Schneidwerkzeug und das Meßsystem geführt werden, können doch vorgegebene Genauigkeiten von zum Beispiel weniger als 100 µm Fügespaltweite eingehalten werden. Bahnabweichungen zwischen Schnittspalt und Sollbahn werden mit hoher Wiederholrate während des Schneidevorgangs ermittelt und in vorbestimmten Grenzen unabhängig von der Position und der Bewegung des Handhabungssystems bestimmt. Qualität und Leistung des bildgebenden Systems sind durch die Höhe der räumlichen und zeitlichen Auflösung bestimmt. Eine hohe räumliche Auflösung ermöglicht eine Vergrößerung des Bildausschnitts und damit eine genauere Steuerung. Eine hohe zeitliche Auflösung erlaubt höhere Schnittgeschwindigkeiten und damit eine höhere Produktion, auch bei komplizierten Bauteilkonturen. Die Genauigkeit kann so gesteigert werden, daß zum Beispiel auf Überlapp- bzw. Bördelnähte verzichtet werden kann, die einen erhöhten Aufwand zur Nahtvorbereitung haben und eine geringere Festigkeit im Vergleich zu Stumpfnähten aufweisen.

Wesentlich ist, daß während des Meßvorgangs, also während der meßtechnischen Erfassung der Bauteiloberfläche TO1 eine Markierung erzeugt wird. Vorstehend wurde die Ausbildung einer einzigen Markierung Ma beschrieben. Markierungen können jedoch auch wiederholt angewendet werden, wenn eine komplizierte Geometrie des Bauteils 1 dies erfordert. Solche Markierungen werden entlang der Sollbahn oder in ihrer Nähe erzeugt, so daß sie mit dem bildgebenden System beobachtbar sind. Derartige Markierungen können als meßtechnisch erfaßbare Kulisse bezeichnet werden, mit deren Hilfe eine wiederholte oder fortwährende Referenzierung des Sensors 4 möglich ist.

## Patentansprüche

1. Verfahren zum Schneiden von zu fügenden Bauteilen (1,2) mit Laserstrahlung (Str), die mittels eines rechnergesteuerten Handhabungssystems geführt wird, dem für jedes Bauteil (1,2) eine Sollbahn (SB) vorgegeben ist, die einer infolge mindestens eines insbesondere dreidimensionalen Bauteils (1) gekrümmten Fügelinie entspricht, **dadurch gekennzeichnet, daß** die Fügelinie umfassende Oberflächen (TO1, TO2) der Bauteile (1,2) meßtechnisch erfaßt und mit Hilfe von dabei gewonnenen Meßergebnissen die einer Durchdringungslinie (D) der Bauteile (1,2) entsprechende Sollbahn (SB) errechnet wird, daß auf einer der meßtechnischen Erfassung zugrundeliegenden Bauteiloberfläche (TO1, TO2) eine Markierung (Ma) dieser Bauteiloberfläche (TO1) erfolgt, daß bei dem Schneiden eines Bauteils (1) die entstandene Schnittfuge (3) und die Markierung (Ma) der Bauteiloberfläche (TO1) meßtechnisch erfaßt werden, und daß das Handhabungssystem im Falle einer Abweichung der Schnittfuge (3) von der Sollbahn (SB) während des Schneidens im Sinne einer Beseitigung dieser Abweichung angesteuert wird.

2. Verfahren nach Anspruch 1, **dadurch gekennzeichnet, daß** die Markierung (Ma) der meßtechnisch erfaßten Bauteiloberfläche (TO1) zugleich mit deren meßtechnischer Erfassung erfolgt.

3. Verfahren nach Anspruch 1 oder 2, **dadurch gekennzeichnet, daß** die Markierung (Ma) mit dem das Schneiden des Bauteils (1) durchführenden Laser erfolgt.

4. Verfahren nach einem der Ansprüche 1 bis 3, **dadurch gekennzeichnet, daß** die Markierung (Ma) auf der Sollbahn (SB) oder in deren Nähe erfolgt.

5. Verfahren nach einem der Ansprüche 1 bis 4, **dadurch gekennzeichnet, daß** die Markierung (Ma) nur stellenweise erfolgt.

6. Verfahren nach Anspruch 1, **dadurch gekennzeichnet, daß** als Markierung (Ma) die beim Schneiden entstehende Schnittfuge (3) verwendet wird.

7. Verfahren nach einem der Ansprüche 1 bis 6, **dadurch gekennzeichnet, daß** bei der meßtechnischen Erfassung der Markierung (Ma) und der Schnittfuge (3) derselbe Sensor (4) verwendet wird.

8. Verfahren nach einem der Ansprüche 1 bis 7, **dadurch gekennzeichnet, daß** ein für eine meßtechnische Erfassung eingesetzter Sensor (4) bildgebend ist.

9. Verfahren nach einem der Ansprüche 1 bis 8, **dadurch gekennzeichnet, daß** ein für eine meßtechnische Erfassung eingesetzter Sensor (4) eine CCD-Kamera ist.

10. Verfahren nach einem der Ansprüche 1 bis 9, **dadurch gekennzeichnet, daß** die Bauteile (1,2) bei einer meßtechnischen Erfassung ihrer Bauteiloberflächen (TO1,TO2) in einer vorbestimmten relativen Anordnung positioniert werden.

11. Verfahren nach einem der Ansprüche 1 bis 10, **dadurch gekennzeichnet, daß** bei einer meßtechnischen Erfassung zweier Bauteiloberflächen (TO1, TO2) zwei in einer vorbestimmten relativen Anordnung positionierte Abstandsmeßgeräte (A1,A2) verwendet werden.

## Claims

1. Method of cutting by laser radiation (Str) components (1, 2) which are to be joined, said laser radiation is guided by means of a computer-controlled handling system, to which a desired path (SB) is specified for each component (1, 2) and corresponds to a joining line which is curved as a result of at least one in particular three-dimensional component (I), **characterised in that** surfaces (TO1, T02) of the components (1, 2) comprising the joining line are detected by measuring technology and with the aid of measurement results thus obtained the desired path (SB) corresponding to a penetration line (D) of the components (1, 2) is calculated, that on one component surface (TO1, T02) forming the basis of the measuring-technology detection, a marking (Ma) is provided on this component surface (TO1), that during cutting of a component (1), the resultant cutting gap (3) and the marking (Ma) of the component surface (TO1) are detected by measuring technology, and that in the event of a deviation in the cutting gap (3) from the desired path (SB) during cutting the handling system is controlled in such a way as to correct this deviation.

2. Method as claimed in claim 1, **characterised in that** the marking (Ma) of the component surface (TO1) as detected by measuring technology is performed at the same time as the measuring-technology detection thereof.

3. Method as claimed in claim 1 or 2, **characterised in that** the marking (Ma) is performed by the laser which performs the cutting of the component (1).

4. Method as claimed in any one of claims I to 3, **characterised in that** the marking (Ma) is performed on the desired path (SB) of in the vicinity thereof.

5. Method as claimed in any one of claims 1 to 4, **characterised in that** the marking (Ma) is only performed at some locations.

6. Method as claimed in claim 1, **characterised in that** the cutting gap (3) which results during cutting is used as the marking (Ma).

7. Method as claimed in any one of claims 1 to 6, **characterised in that** the same sensor (4) is used during the detection of the marking (Ma) and of the cutting gap (3) by measuring technology.

8. Method as claimed in any one of claims 1 to 7, **characterised in that** a sensor (4) which is used for measuring-technology detection is an imaging sensor.

9. Method as claimed in any one of claims 1 to 8, **characterised in that** a sensor (4) which is used for measuring-technology detection is a CCD-camera.

10. Method as claimed in any one of claims 1 to 9, **characterised in that** the components (1, 2) are positioned in a predetermined relative arrangement during detection of their component surfaces (TO1, T02) by measuring technology.

11. Method as claimed in any one of claims 1 to 10, **characterised in that** two distance measuring devices (A1, A2) which are positioned in a predetermined relative arrangement are used during detection of two component surfaces (TO1, T02) by measuring technology.

## Revendications

1. Procédé pour couper des éléments de construction à assembler (1, 2) à l'aide d'un rayon laser (Str) qui est guidé grâce à un système de manipulation commandé par ordinateur auquel est imposée pour chaque élément (1, 2) une trajectoire théorique (SB) correspondant à une ligne d'assemblage courbe due à la forme en trois dimensions, notamment, d'au moins un élément (1),
**caractérisé en ce que** des surfaces (TO1, T02) des éléments de construction (1, 2) qui contiennent la ligne d'assemblage sont détectées à l'aide d'une technique de mesure, et la trajectoire théorique (SB) correspondant à une ligne de pénétration (D) des éléments de construction (1, 2) est calculée à l'aide des résultats de mesure ainsi recueillis, **en ce que** sur une surface d'élément (TO1, TO2) sur laquelle est basée la détection à l'aide d'une technique de mesure, un marquage (Ma) de cette surface d'élément (T01) a lieu, **en ce que** lors du découpage d'un élément (1), l'entaille formée (3) et le marquage (Ma) de la surface d'élément (TO1) sont détectés à l'aide d'une technique de mesure, et **en ce que** le système de manipulation, en cas d'écart entre l'entaille (3) et la trajectoire théorique (SB) pendant le découpage, est commandé en vue de supprimer cet écart.

2. Procédé selon la revendication 1, **caractérisé en ce que** le marquage (Ma) de la surface d'élément (TO1) détectée à l'aide d'une technique de mesure se fait en même temps que la détection de ladite surface à l'aide d'une technique de mesure.

3. Procédé selon la revendication 1 ou 2, **caractérisé en ce que** le marquage (Ma) se fait avec le laser qui effectue le découpage de l'élément de construction (1).

4. Procédé selon l'une des revendications 1 à 3, **caractérisé en ce que** le marquage (Ma) se fait sur la trajectoire théorique (SB) ou près de celle-ci.

5. Procédé selon l'une des revendications 1 à 4, **caractérisé en ce que** le marquage (Ma) ne se fait que par endroits.

6. Procédé selon la revendication 1, **caractérisé en ce qu'**on utilise comme marquage (Ma) l'entaille (3) qui se forme lors du découpage.

7. Procédé selon l'une des revendications 1 à 6, **caractérisé en ce que** lors de la détection, à l'aide d'une technique de mesure, du marquage (Ma) et de l'entaille (3), on utilise le même capteur (4).

8. Procédé selon l'une des revendications 1 à 7, **caractérisé en ce qu'**un capteur (4) utilisé pour une détection à l'aide d'une technique de mesure offre une visualisation.

9. Procédé selon l'une des revendications 1 à 8, **caractérisé en ce qu'**un capteur (4) utilisé pour une détection à l'aide d'une technique de mesure est constitué par une caméra CCD.

10. Procédé selon l'une des revendications 1 à 9, **caractérisé en ce que** les éléments de construction (1, 2), lors d'une détection à l'aide d'une technique de mesure de leurs surfaces (TO1, TO2), sont positionnés suivant une disposition relative prédéfinie.

11. Procédé selon l'une des revendications 1 à 10, **caractérisé en ce que** lors d'une détection à l'aide d'une technique de mesure de deux surfaces d'éléments (TO1, T02), on utilise deux appareils de mesure d'écartement (A1, A2) positionnés suivant une disposition relative prédéfinie.
